# FASCICULE DE BREVET EUROPEEN

(11) **EP 3 168 126 B1**
(45) Date de publication et mention de la délivrance du brevet: **09.05.2018**
(21) Numéro de dépôt: 16198824.1
(22) Date de dépôt: 15.11.2016
(51) Int. Cl.: B63B 1/28

(54) **AILE PORTANTE EN FORME DE T INVERSÉ ADAPTÉE POUR ÊTRE INSTALLÉE SUR UN BATEAU**
TRAGFLÜGEL IN FORM EINES UMGEDREHTEN T, DER ANGEPASST IST, UM AUF EINEM BOOT INSTALLIERT ZU WERDEN
INVERTED T-SHAPED WING SUITABLE FOR BEING INSTALLED ON A BOAT

(30) Priorité: 16.11.2015 FR 1560951
(43) Date de publication de la demande: 17.05.2017
(73) Titulaire: XAP, 30420 Calvisson (FR)
(72) Inventeur: HARDY, François, 30820 CAVEIRAC (FR); THERY, Pierre, 30620 UCHAUD (FR)
(74) Mandataire: Roman, Alexis

(56) Documents cités:
- FR-A1- 2 862 602
- JP-A- H07 205 891

## Description

### Domaine technique de l'invention.

L'invention a pour objet une aile portante (ou hydrofoil), un bateau équipé d'une telle aile portante, ainsi qu'un procédé de fabrication de cette aile portante.

Elle concerne le domaine technique général des navires ou engins flottants tirant une portance supplémentaires des forces hydrodynamiques, par l'intermédiaire d'une aile portante, ou hydrofoil. Elle concerne plus particulièrement le domaine technique des ailes portantes immergées ayant une forme de T inversé.

### État de la technique.

La surface de contact entre la coque d'un bateau et l'eau est directement liée à la masse du bateau et à sa vitesse. Plus celle-ci est grande, plus la traînée induite par le frottement de l'eau freine le déplacement du bateau.

Il existe donc des dispositifs sustentateurs conçus pour créer une portance verticale positive provoquant le soulèvement du bateau au-dessus du niveau de l'eau. La surface de contact eau/coque, donc la traînée, est alors réduite, augmentant de ce fait la performance du bateau.

Ces dispositifs sustentateurs sont communément appelés hydrofoils. Ce sont des ailes portantes composées d'un plan porteur immergé. A mesure que la vitesse du bateau augmente, la force de portance générée par le flux d'eau sur le plan porteur croît également : le bateau s'élève.

Il existe un risque important que l'hydrofoil atteigne la limite eau/air, et qu'il cesse alors de fonctionner correctement. Il y a dans ce cas une chute brutale de la force de portance. Le bateau replonge dans l'eau et perd de la vitesse. En outre, lorsque le bateau s'élève au dessus de l'eau dans une mer modérée à forte, l'hydrofoil est également susceptible de dépasser la limite eau/air, le bateau risquant alors de perdre en stabilité.

On comprend qu'il est avantageux d'associer les hydrofoils à des dispositifs de stabilisation qui puissent contrôler leur hauteur d'élévation et/ou qui puissent stabiliser le bateau lorsqu'il navigue.

Pour cela, on connait des hydrofoils en forme de T inversé dont l'inclinaison du plan porteur est réglable. Généralement, un actionneur permet de régler l'inclinaison du plan porteur, et donc la force portante. Un système de capteurs détermine au moins un mouvement du bateau lorsque ce dernier navigue (ex : hauteur par rapport au niveau de la mer, tangage, roulis, lacet). Le dispositif de stabilisation est adapté pour commander l'actionneur et faire varier l'inclinaison du plan porteur en fonction du mouvement du bateau déterminé par le système de capteurs.

On connait plus particulièrement par le document brevet FR 1.373.041 (UNITED AIRCRAFT CORPORATION), un dispositif de stabilisation automatique associé à un hydrofoil pourvu d'ailerons mobiles. Plusieurs capteurs permettent de déterminer les mouvements du bateau dans plusieurs directions. Une unité de commande actionne les ailerons mobiles selon les mouvements du bateau, dans le but de le stabiliser. Un tel dispositif de stabilisation nécessite d'être alimenté électriquement par une batterie extérieure installée dans le bateau. Il est donc nécessaire de prévoir une connectique électrique entre l'hydrofoil et cette batterie déportée. En outre, la génératrice susceptible de fournir du courant à cette batterie est également déportée. Cela impose d'utiliser un matériel d'encombrement conséquent, peu adapté à une utilisation sur une embarcation légère de sport, de type catamaran par exemple.

Dans le document brevet FR 2.587.967 (LE COZANNET), l'hydrofoil est solidaire d'un bras articulé relié à un dispositif de stabilisation. Ce dernier est adapté pour régler automatiquement la hauteur d'immersion de l'aile portante par réglage de son inclinaison. Le dispositif de stabilisation est constitué d'un circuit utilisant la pression hydrodynamique. Ce circuit comporte essentiellement au moins une prise d'eau coopérant avec un vérin dont le piston est raccordé au bras articulé pour faire pivoter celui-ci et modifier l'angle d'incidence de l'aile portante par ce mouvement de pivotement du bras articulé. L'utilisation du bras articulé et du vérin rend particulièrement complexe la conception et le montage du dispositif de stabilisation. En outre, ce matériel est encombrant et là encore, peu adapté à une utilisation sur une embarcation légère.

Dans le document brevet FR 2.862.602 (ALDIN), l'hydrofoil comprend un actionneur adapté pour régler l'inclinaison du plan porteur, cet actionneur étant intégré dans un logement aménagé dans une jambe de force. La conception et l'installation d'un tel hydrofoil apparaissent être relativement complexes.

L'invention vise à remédier à cet état des choses. En particulier, un objectif de l'invention est de simplifier le montage et l'installation de l'hydrofoil sur un bateau.

Un autre objectif de l'invention est de réduire l'encombrement du dispositif de stabilisation.

Encore un autre objectif de l'invention est de proposer un hydrofoil qui puisse être facilement et rapidement installé sur tout type de bateau et notamment une embarcation légère de sport.

Un objectif supplémentaire de l'invention est de proposer un système d'hydrofoil qui permette d'améliorer les performances du bateau sur lequel les hydrofoils sont installés.

### Divulgation de l'invention.

La solution proposée par l'invention revendiquée est une aile portante (ou hydrofoil) en forme de T inversé adaptée pour être installée sur un bateau, laquelle aile portante comprend : - une jambe de force dans laquelle est aménagé un logement ; - un plan porteur attaché à la jambe de force et dont l'inclinaison est réglable ; - un système de capteurs installé sur la paroi extérieure de la jambe de force et/ou dans le logement, lequel système de capteurs est adapté pour déterminer au moins un mouvement de l'aile portante ; - un actionneur adapté pour régler l'inclinaison du plan porteur, lequel actionneur est intégré dans le logement de la jambe de force.

Cette aile portante est remarquable en ce que :
- le logement de la jambe de force intègre une unité de commande électronique adaptée pour commander l'actionneur et faire varier l'inclinaison du plan porteur en fonction du mouvement de l'aile portante déterminé par le système de capteurs,
- l'unité de commande électronique et/ou l'actionneur et/ou le système de capteurs sont à fonctionnement électrique, leur alimentation électrique étant assurée par une turbine hydroélectrique installée dans l'aile portante.

L'hydrofoil intègre donc maintenant un dispositif de stabilisation autonome permettant de contrôler l'inclinaison du plan porteur. En particulier, la turbine hydroélectrique permet de produire l'électricité nécessaire au fonctionnement autonome de l'hydrofoil. En conséquence, pour installer ce dernier sur le bateau, seule une connexion mécanique est nécessaire, sans qu'il soit utile de prévoir une quelconque connexion électrique entre ledit hydrofoil et ledit bateau. De plus, aucun matériel encombrant supplémentaire ne doit être installé sur le bateau pour le fonctionnement de l'hydrofoil. Ce dernier peut donc être installé sur tout type de bateau pour en améliorer les performances, et notamment être installé sur une embarcation légère de sport.

D'autres caractéristiques avantageuses de l'aile portante sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- La turbine hydroélectrique est préférentiellement logée dans un logement agencé à l'intersection de la jambe de force et du plan porteur.
- Avantageusement, la turbine hydroélectrique alimente une batterie électrique, laquelle batterie est installée dans le logement de la jambe de force.
- L'unité de commande électronique est connectée d'une part au système de capteurs et d'autre part à l'actionneur, laquelle unité de commande est adaptée pour :
   ∘ déterminer une valeur d'inclinaison du plan porteur en réponse à la réception des signaux émis par le système de capteurs,
   ∘ générer une instruction de commande correspondante à la valeur d'inclinaison déterminée,
   ∘ transmettre cette instruction de commande à l'actionneur pour régler l'inclinaison du plan porteur à la valeur d'inclinaison déterminée.
- Le plan porteur peut comprendre un profilé porteur fixe qui est solidaire de la jambe de force et un bord de fuite présentant deux ailerons à inclinaison réglable, lesquels ailerons sont montés mobile en rotation sur ledit profilé porteur ; dans ce cas, l'actionneur est accouplé à chacun des ailerons de manière à faire varier indépendamment leur inclinaison respective ; le système de capteurs est adapté pour déterminer le mouvement de roulis de l'aile portante ; et l'unité de commande est adaptée pour :
   ∘ déterminer une valeur d'inclinaison de chaque aileron en réponse à la réception des signaux émis par le système de capteurs,
   ∘ générer des instructions de commande correspondante aux valeurs d'inclinaison déterminées,
   ∘ transmettre ces instructions de commande à l'actionneur pour régler l'inclinaison de chaque aileron à la valeur d'inclinaison respectivement déterminée et obtenir une courbure dissymétrique du plan porteur.
- Le plan porteur peut comprendre un profilé porteur fixe solidaire de la jambe de force et au moins un aileron de bord de fuite à inclinaison réglable, lequel aileron est monté mobile en rotation sur le profilé porteur, l'actionneur étant accouplé audit aileron de manière à faire varier son inclinaison.
- Le système de capteurs comprend avantageusement un ou plusieurs des capteurs suivants : un capteur de hauteur d'eau adapté pour déterminer la profondeur d'immersion de la jambe de force ; une centrale inertielle comprenant deux gyroscopes verticaux adaptés pour déterminer les angles de tangage et de roulis de l'aile portante et/ou un gyroscope horizontal adapté pour déterminer l'angle de lacet de ladite aile et/ou un accéléromètre tri-axial adapté pour mesurer l'accélération de ladite aile induite par le tangage et le roulis de ladite aile ; un GPS adapté pour mesurer la vitesse de déplacement de l'aile portante.
- Préférentiellement, le logement de la jambe de force intègre un module d'émission/réception sans fil adapté pour émettre et recevoir des signaux.

Un autre aspect de l'invention concerne un bateau comportant :
- au moins une aile portante immergée en forme de T inversé, laquelle aile portante comprend :
   ∘ une jambe de force rattachée au bateau,
   ∘ un plan porteur attaché à la jambe de force et dont l'inclinaison est réglable,

- un système de capteurs pour déterminer au moins un mouvement du bateau lorsque ce dernier navigue,
- un actionneur adapté pour régler l'inclinaison du plan porteur,
- un dispositif de stabilisation adapté pour commander l'actionneur et faire varier l'inclinaison du plan porteur en fonction du mouvement du bateau déterminé par le système de capteurs.

Ce bateau est remarquable en ce que l'aile portante est conforme à l'une quelconque des caractéristiques précédentes, de sorte que :
- le système de capteurs est installé sur la paroi extérieure de la jambe de force et/ou dans le logement,
- le dispositif de stabilisation se présente sous la forme d'une unité de commande électronique, le logement de la jambe de force intégrant l'actionneur et ladite unité de commande,
- l'unité de commande électronique et/ou l'actionneur et/ou le système de capteurs sont à fonctionnement électrique, leur alimentation électrique étant assurée par une turbine hydroélectrique installée dans l'aile portante.

D'autres caractéristiques avantageuses du bateau sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Avantageusement, le bateau comporte au moins deux ailes portantes conformes à l'invention : une aile portante est installée sur le bateau de manière à former une dérive ; et une autre aile portante est installée sur le bateau de manière à former un safran.
- Chaque aile portante intègre préférentiellement un module d'émission/réception sans fil adapté pour émettre et recevoir des signaux, de sorte que les deux ailes sont adaptées pour communiquer entre elles par l'intermédiaire d'une liaison sans fil.

- Avantageusement, l'unité de commande électronique d'une première aile portante est connectée au module d'émission/réception de ladite première aile portante, laquelle unité de commande est adaptée pour :
   ∘ déterminer une valeur d'inclinaison du plan porteur de la première aile portante en réponse à la réception des signaux émis par le système de capteurs de ladite première aile portante,
   ∘ générer une instruction de commande correspondant à la valeur d'inclinaison déterminée,
   ∘ transmettre cette instruction de commande au module d'émission/réception de la deuxième aile portante.
- L'unité de commande électronique de la deuxième aile portante est connectée au module d'émission/réception de ladite deuxième aile portante, ladite unité de commande étant adaptée pour :
   ∘ déterminer une valeur d'inclinaison du plan porteur de la deuxième aile portante prenant en compte l'instruction de commande reçue par le module d'émission/réception de ladite deuxième aile portante,
   ∘ générer une nouvelle instruction de commande correspondant à la valeur d'inclinaison déterminée,
   ∘ transmettre cette nouvelle instruction de commande à l'actionneur de la deuxième aile portante pour régler l'inclinaison du plan porteur de ladite deuxième aile portante.
- L'unité de commande électronique de la deuxième aile portante peut être adaptée pour déterminer la valeur d'inclinaison du plan porteur de ladite deuxième aile portante en prenant en compte non seulement l'instruction de commande reçue par le module d'émission/réception de ladite deuxième aile portante, mais également les signaux émis par le système de capteurs de ladite deuxième aile portante.
- Le bateau peut comporter au moins une jambe de force supportant une voile et plusieurs coques, chaque coque étant associée à une aile portante formant dérive et à une autre aile portante formant safran.

Encore un autre aspect de l'invention concerne un procédé de fabrication d'une aile portante en forme de T inversé, laquelle aile portante comprend une jambe de force à laquelle est attaché un plan porteur dont l'inclinaison est réglable. Ce procédé comprend les étapes suivantes :
- aménager un logement dans la jambe de force,
- installer un système de capteurs sur la paroi extérieure de la jambe de force et/ou dans son logement, lequel système de capteur est adapté pour déterminer au moins un mouvement de l'aile portante,
- installer une turbine hydroélectrique dans l'aile portante,
- installer dans le logement de la jambe de force un actionneur adapté pour régler l'inclinaison du plan porteur et une unité de commande électronique adaptée pour commander ledit actionneur et faire varier l'inclinaison dudit plan porteur en fonction du mouvement de l'aile portante déterminé par le système de capteurs, ladite unité de commande et/ou ledit actionneur et/ou ledit système de capteurs étant à fonctionnement électrique,
- connecter électriquement l'unité de commande électronique et/ou l'actionneur et/ou le système de capteurs à la turbine hydroélectrique.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective, depuis la face avant, d'une aile portante conforme à l'invention,
- la figure 2 est une vue en perspective, depuis la face arrière, d'une aile portante conforme à l'invention,
- la figure 3 est une vue de face de l'aile portante des figures 1 et 2,
- la figure 4 est une vue de dessus de l'aile portante des figures 1 et 2,
- la figure 5 schématise une coupe longitudinale partielle de la jambe de force d'une aile portante conforme à l'invention,
- la figure 6 est une vue agrandie du détail D de la figure 2,
- la figure 7 est une vue en perspective d'un bateau conforme à l'invention,
- la figure 8 est une vue en perspective de dessous du bateau de la figure 7,
- la figure 9 est une vue en perspective, depuis la face arrière, du bateau des figures 7 et 8, montrant en détail l'installation des hydrofoils.

### Modes préférés de réalisation de l'invention.

Dans la description qui suit, le terme « hydrofoil » est un synonyme strict du terme « aile portante » employé dans les revendications.

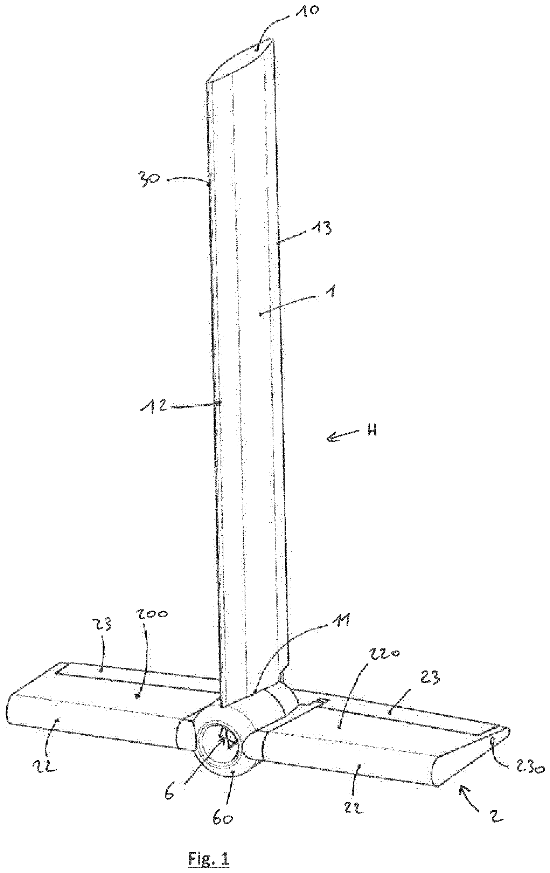

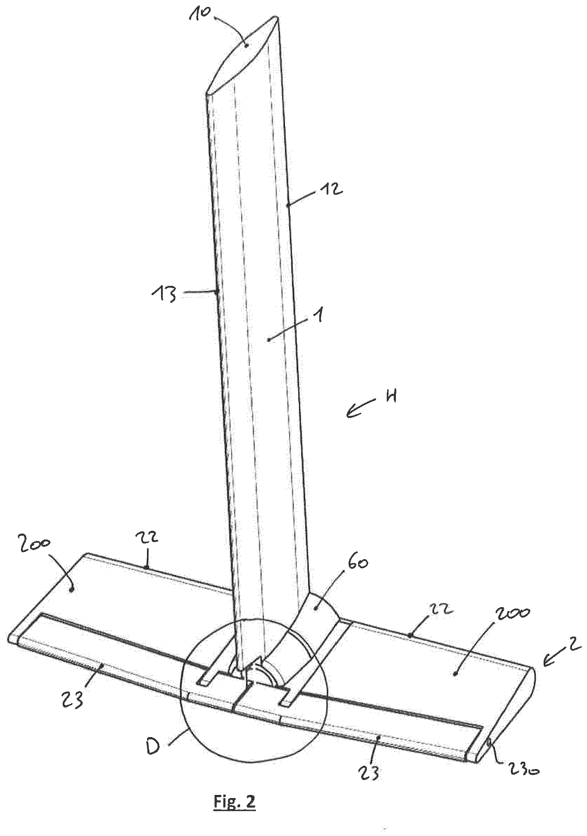

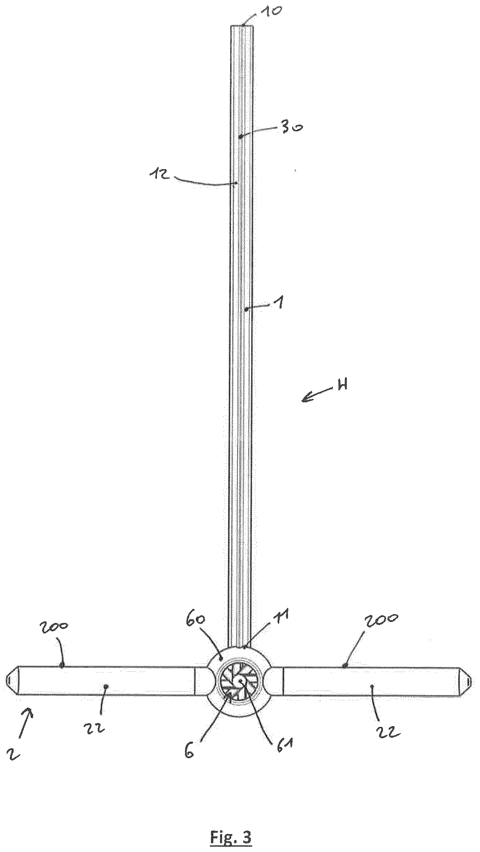

En se rapportant aux figures 1 à 4, l'hydrofoil objet de l'invention a une forme de T inversé.

Il comprend une jambe de force 1 présentant une extrémité supérieure 10 adaptée pour être rattachée à la coque d'un bateau ou à un élément de celui-ci ; et une extrémité inférieure 11 opposée à ladite extrémité supérieure.

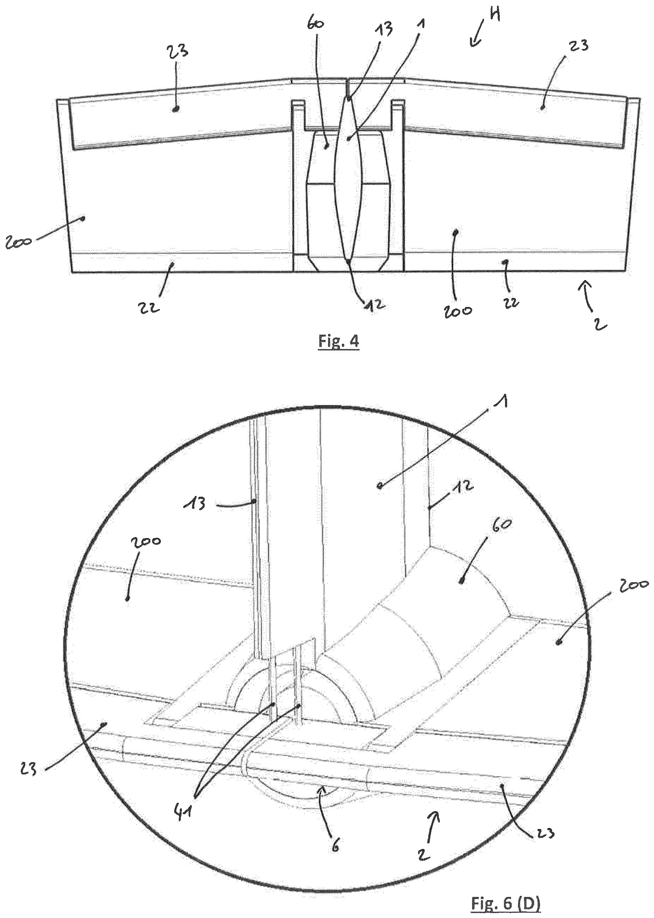

La jambe 1 possède un profil hydrodynamique adapté pour limiter la traînée. Elle présente un bord d'attaque 12 faisant face au flux d'eau et un bord de fuite 13 arrière qui est aminci pour diminuer la traînée. Sur la figure 4, la jambe 1 a une section lenticulaire ou losangique, ce type de section donnant de bons résultats en termes de performances et de réduction de la traînée.

A titre d'exemple illustratif, la jambe 1 peut avoir une longueur comprise entre 50 cm et 2 m, une largeur comprise entre 10 cm et 50 cm et une épaisseur comprise entre 10 cm et 30 cm.

Un plan porteur 2 est attaché à la jambe 1, au niveau de son extrémité inférieure 11. Avantageusement, le plan porteur 2 est disposé perpendiculairement à la jambe 1 et est symétrique par rapport à ladite jambe. La jambe 1 et le plan porteur 2 sont disposés de manière à former un T inversé, le plan porteur 2 formant la barre du T. Lors du déplacement du bateau, le plan porteur 2 transmet la force de portance à la jambe 1, laquelle jambe reporte cette force sur le bateau, provoquant l'élévation de celui-ci.

Comme pour la jambe 1, le plan porteur 2 possède un profil hydrodynamique adapté pour limiter la traînée. Il présente un bord d'attaque 22 faisant face au fluide et un bord de fuite 23 arrière dont la configuration amincie permet de diminuer la traînée. Le plan porteur 2 a le même profil que le plan stabilisateur d'une queue d'avion. Sur les figures 1, 2 et 5, le plan porteur 2 a un profil biconvexe symétrique.

A titre d'exemple illustratif, le plan porteur 2 peut avoir une longueur comprise entre 20 cm et 1,5 m, une largeur comprise entre 10 cm et 50 cm et une épaisseur comprise entre 10 cm et 30 cm.

Selon un mode préféré de réalisation, le plan porteur 2 comprend un profilé porteur fixe 200 qui est solidaire de la jambe de force 1. Le bord de fuite 23 est constitué d'au moins un, préférentiellement deux ailerons à inclinaison réglable de sorte que l'inclinaison globale du plan porteur 2 est réglable.

Les ailerons 23 sont rapportés et montés mobiles en rotation sur le profilé porteur 200 autour d'un axe horizontal 230. Les ailerons 23 sont disposés symétriquement par rapport à la jambe 1. En modifiant l'inclinaison des ailerons 23, la courbure du plan porteur 2 est modifiée, ce qui, en usage, lorsque le bateau se déplace, permet de faire varier la force de portance. L'utilisation de deux ailerons de bord de fuite 23 permet de contrôler le roulis en réglant une courbure dissymétrique du plan porteur 2 (lorsque lesdits ailerons n'ont pas la même inclinaison).

La jambe 1 et le plan porteur 2, notamment le profilé porteur 200, peuvent être réalisés dans un matériau plastique ou composite, du type comportant des fibres de verre ou de carbone imprégnées de résines, éventuellement stratifiées autour d'un coeur en matériau tendre (mousse ou bois). La jambe 1 et le plan porteur 2 peuvent également être réalisés en inox ou en aluminium.

Le procédé préféré de fabrication est le moulage, bien que l'usinage puisse être envisagé, notamment dans le cas où un matériau du type inox ou aluminium est utilisé. Les ailerons 23 sont préférentiellement réalisés dans le même matériau que le profilé porteur 200, mais peuvent être fabriqués dans un autre matériau, plus rigide ou plus souple.

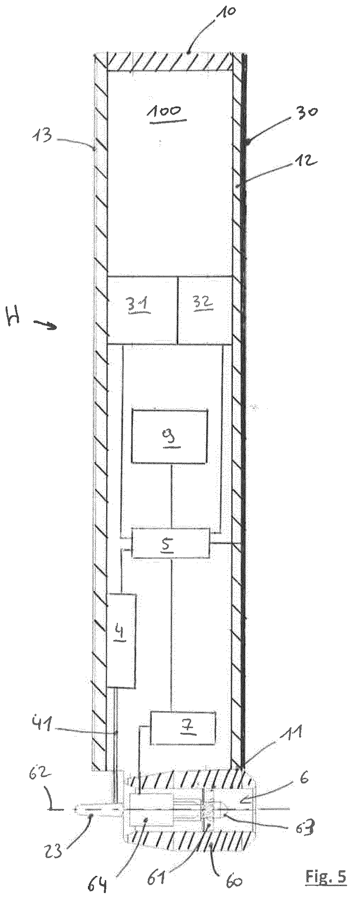

En se rapportant à la figure 5, un logement 100 est aménagé dans la jambe 1. A l'intérieur de ce logement 100, sont notamment installés des capteurs 31, 32, un actionneur 4, une unité de commande 5, une batterie 7 et un module d'émission/réception 9, ces éléments étant décrits plus avant dans la description.

Le logement 100 peut s'étendre sur toute la longueur de la jambe 1 et se présenter sous la forme d'une structure creuse formant ladite jambe.

Il peut également s'étendre sur une partie seulement de la jambe 1, auquel cas il forme une cavité. Le logement 100 a préférentiellement une section circulaire dont le diamètre varie de 5 cm à 15 cm et une longueur correspondante à celle de la jambe 1.

Le logement 100 est préférentiellement conformé lors du moulage de la jambe 1. Il peut toutefois être obtenu à posteriori, par exemple par usinage, après moulage de la jambe 1.

Le logement 100 peut déboucher au niveau de l'extrémité supérieure 10, de manière à pouvoir aisément insérer les différents éléments décrits plus avant dans la description. L'extrémité supérieure 10 peut ensuite être obturée de manière étanche par un élément d'obturation approprié 110, lequel élément est maintenu en place par collage, soudage, vissage, etc. L'extrémité 10 peut également être directement obturée par la coque du bateau sur lequel l'hydrofoil H est installé.

Un système de capteurs est installé sur la paroi extérieure de la jambe 1 et/ou dans le logement 100. Ce système de capteur est adapté pour déterminer au moins un mouvement du bateau lorsque ce dernier navigue, et incidemment au moins un mouvement de l'hydrofoil H.

Sur la figure 5, le système de capteur comprend un ou plusieurs des capteurs suivants :
- un capteur de hauteur d'eau 30 adapté pour déterminer la profondeur d'immersion de la jambe 1. Ce capteur 30 se présente par exemple sous la forme d'un capteur à ultrason ou d'un fil capacitif installé le long de la jambe 1, sur sa paroi extérieure, au niveau du bord d'attaque 12. On peut par exemple utiliser un fil capacitif commercialisé par la société MILONE TECHNOLOGIES INC sous la référence série « eTape sensor » ;
- une centrale inertielle 31 adaptée pour anticiper des mouvements, des accélérations ou des freinages du bateau. Cette centrale 31 est installée dans le logement 100 et comprend : deux gyroscopes verticaux adaptés pour déterminer les angles de tangage et de roulis du bateau ou de l'hydrofoil H; et/ou un gyroscope horizontal adapté pour déterminer l'angle de lacet du bateau ou de l'hydrofoil H; et/ou un accéléromètre tri-axial comprenant trois accéléromètres perpendiculaires entre eux et qui sont adaptés pour mesurer l'accélération du bateau ou de l'hydrofoil H induite par le tangage et le roulis dudit bateau ou dudit l'hydrofoil H. On peut par exemple utiliser une centrale inertielle commercialisée par la société ST sous la référence LSM6DS3.
- un GPS 32 adapté pour mesurer la vitesse de déplacement du bateau ou de l'hydrofoil H. Ce GPS est installé dans le logement 100 et peut notamment être directement intégré dans la centrale inertielle 31 précitée.

Sur la figure 5, le logement 100 intègre également un actionneur 4 adapté pour régler l'inclinaison du plan porteur 2.

Sur les figures annexées, l'actionneur 4 est accouplé aux ailerons de bord de fuite 23 de manière à faire varier leur inclinaison. Cet actionneur 4 se présente sous la forme d'un ou plusieurs moteurs linéaires ou vérins électriques à déplacement vertical logés dans le logement 100. On utilise par exemple un moteur électrique commercialisé par la société MOXON MOTOR sous la référence maxon EC-4pole.

En pratique, on prévoit un moteur ou un vérin par aileron 23 de manière à pouvoir régler indépendamment leur inclinaison. En particulier, lorsque deux ailerons de bord de fuite 23 sont utilisés de manière à pouvoir contrôler le roulis en, on prévoit avantageusement d'associer chacun de ces ailerons à un moteur ou vérin qui lui est dédié, la commande de ces moteurs ou vérins par l'unité de commande 5 permettant un réglage dissymétrique de la courbure du plan porteur 2.

Comme illustré sur la figure 6, l'actionneur 4 est accouplé à des tiges 41 qui sont solidaires des ailerons 23 par l'intermédiaire d'une liaison pivot ou d'une liaison rotule, de sorte que le déplacement vertical desdites tiges provoque la rotation desdits ailerons autour de l'axe 230.

Le logement 100 intègre en plus une unité de commande électronique 5 adaptée pour commander l'actionneur 4 et faire varier l'inclinaison du plan porteur 2 en fonction du mouvement du bateau ou de l'hydrofoil H, lequel mouvement est déterminé par le système de capteurs précité.

L'unité de commande 5 se présente sous la forme d'une carte électronique comprenant notamment un processeur ou microprocesseur et une ou plusieurs mémoires dans lesquelles sont enregistrés un ou plusieurs programmes informatiques dont les instructions, lorsqu'elles sont exécutées par ledit processeur ou ledit microprocesseur, permettent de mettre en oeuvre les fonctionnalités décrites plus avant dans la description. L'ensemble des composants de l'unité de commande 5 sont à fonctionnement électrique et sont alimentés en 12 V ou 24 V.

L'unité de commande 5 est connectée d'une part au système de capteurs 30, 31, 32 et d'autre part à l'actionneur 4. Les programmes intégrés dans l'unité de commande 5 sont adaptés pour :
- déterminer une valeur d'inclinaison du plan porteur 2, et plus particulièrement des ailerons 23, en réponse à la réception des signaux émis par les capteurs 30, 31, 32 ; en pratique, la valeur d'inclinaison est déterminée par un algorithme de calcul, par exemple du type décrit dans le document brevet FR 1.373.041 précité ;
- générer une instruction de commande correspondante à la valeur d'inclinaison déterminée ;
- transmettre cette instruction de commande à l'actionneur 4 pour régler l'inclinaison du plan porteur 2, et plus particulièrement des ailerons 23, à la valeur d'inclinaison déterminée.

Par exemple, l'unité de commande 5 peut être programmée pour maintenir la hauteur d'immersion de l'hydrofoil à une valeur de référence prédéterminée. La hauteur réelle d'immersion est déterminée par le capteur 30.

Lorsque le bateau commence à se déplacer, tant que la hauteur d'immersion réelle n'atteint pas la valeur de référence, l'unité de commande 5 génère une instruction de commande pour placer les ailerons 23 dans une position inclinée par exemple de 5° à 20° vers le bas par rapport au profilé porteur 200, ce qui a tendance à augmenter la force de portance pour faire s'élever ledit bateau. La vitesse de montée du bateau dépend de l'angle d'inclinaison des ailerons 23 : plus l'angle est important, plus le bateau s'élève rapidement.

Dès que la hauteur d'immersion réelle atteint la valeur de référence, l'unité de commande 5 génère une nouvelle instruction de commande pour positionner les ailerons 23 dans le même plan que le profilé porteur 200, de sorte que la hauteur d'élévation du bateau reste constante.

Si la hauteur d'immersion réelle dépasse la valeur de référence, l'unité de commande 5 génère une autre instruction de commande pour placer les ailerons 23 dans une position inclinée par exemple de 5° à 20° vers le haut par rapport au profilé porteur 200, ce qui a tendance à réduire la force de portance et faire redescendre le bateau. La vitesse de descente du bateau dépend de l'angle d'inclinaison des ailerons 23: plus l'angle est faible, plus le bateau descend lentement.

L'unité de commande 5 peut également être programmée pour régler le roulis en jouant sur la dissymétrie des ailerons 23.

Lorsque le bateau penche vers tribord, l'unité de commande 5 génère une instruction de commande pour placer l'aileron 23 situé à tribord dans une position inclinée par exemple de 0° à 10° vers le bas par rapport au profilé porteur 200 et/ou placer l'aileron 23 situé à bâbord dans une position inclinée par exemple de 0° à 10° vers le haut par rapport audit profilé porteur 200. Dans cette configuration, la force portante est augmentée côté tribord des plans porteurs 2 et/ou diminuée côté bâbord, générant une force anti-roulis qui tend à replacer le bateau dans une position droite.

Lorsque le bateau penche vers bâbord, c'est l'aileron 23 situé à tribord qui est incliné vers le haut et/ou l'aileron 23 situé à bâbord qui est incliné vers le bas pour générer la force anti-roulis.

L'unité de commande 5 est également adaptée pour enregistrer dans sa mémoire tous les paramètres de navigation captés par les capteurs 30, 31, 32.

Le logement 100 intègre en outre un module d'émission/réception 9 sans fil adapté pour émettre et recevoir des signaux. Ce module 9 est installé dans le logement 100 en même temps que les autres éléments. Il comprend un module d'émission et un module de réception et peut être connecté à l'unité de commande 5 ou faire partie intégrante de cette dernière.

D'une manière générale, l'unité 5 est adaptée pour transmettre au module 9 des instructions pour émettre des signaux. Elle est également adaptée pour recevoir et traiter les signaux reçus par le module 9.

Les signaux émis/reçus peuvent être des signaux radiofréquence (RF), des signaux Wifi, Bluetooth. On peut par exemple utiliser un module démission/réception commercialisé par la société MURATA sous la référence LBEH5HMZPC.

Comme cela est expliqué plus avant dans la description, les signaux émis/reçus contiennent notamment des instructions de commande permettant de régler l'inclinaison du plan porteur 2, et plus particulièrement l'inclinaison des ailerons 23, à des valeurs d'inclinaison déterminées.

Les signaux émis/reçus peuvent également contenir des instructions permettant de régler ou de modifier la programmation de l'unité de commande 5. Il peut encore s'agir d'instructions permettant de récupérer tous les paramètres de navigation enregistrés dans la mémoire de l'unité de commande 5. Dans chacun de ces cas, les instructions sont préférentiellement émises depuis un organe de pilotage portable externe, tel qu'un Smartphone ou un ordinateur portable par exemple.

Les signaux émis/reçus peuvent encore contenir tous les paramètres de navigation enregistrés dans la mémoire de l'unité de commande 5

Pour alimenter électriquement l'unité de commande électronique 5 et, le cas échéant, l'actionneur 4 et/ou les capteurs 30, 31, 32 et/ou le module d'émission/réception 9 lorsqu'ils sont à fonctionnement électrique, une turbine hydroélectrique 6 est installée dans l'hydrofoil H.

Dans le mode de réalisation des figures 1 à 6, la turbine hydroélectrique 6 est logée dans un logement 60 agencé à l'intersection de la jambe 1 et du plan porteur 2. Ce logement 60 est situé au niveau de l'extrémité inférieure 11 de la jambe 1. Il est horizontal, parallèle à la direction de déplacement de l'hydrofoil H ou du bateau, et s'étend sensiblement sur toute la largeur de la jambe 1, depuis le bord d'attaque 12 jusqu'au bord de fuite 13. Il a une forme tubulaire ou tronconique et est débouchant à chacune de ses extrémités. Son diamètre externe est par exemple compris entre 10 cm et 40 cm et son diamètre interne compris entre 5 cm et 35 cm.

Le logement 60 est réalisé dans le même matériau que la jambe 1 et/ou que le profilé porteur 200. Il peut être rapporté par collage, soudage ou vissage sur la jambe 1. Dans ce cas, le profilé porteur 200 est également rapporté par collage, soudage ou vissage de part et d'autre du logement 60.

Sur la figure 5, la turbine 6 comporte une hélice 61 installée à l'intérieur du logement 60. Cette hélice 61 est mise en rotation autour d'un axe horizontal 62 parallèle à la direction de déplacement de l'hydrofoil H ou du bateau, au moyen du flux d'eau relatif induit par le déplacement dudit hydrofoil ou dudit bateau. L'hélice 61 est solidaire d'un arbre support 63 coaxial à l'axe 62. Cet arbre 63 est couplé à un alternateur 64 qui délivre un courant électrique. De la sorte, la turbine 6 convertit l'énergie mécanique des pales de l'hélice 61 en énergie électrique.

Le courant électrique délivré par l'alternateur 64 peut directement servir à alimenter l'unité de commande 5 et, le cas échéant l'actionneur 4 et/ou les capteurs 30, 31, 32 et/ou le module d'émission/réception 9. Toutefois, pour assurer une réserve tampon garantissant le fonctionnement de l'hydrofoil H quelle que soit la vitesse du bateau, la turbine 6 alimente préférentiellement une batterie électrique 7 dans laquelle est stockée l'énergie électrique produite.

Par « batterie », on entend au sens de l'invention tout dispositif adapté pour stocker une charge électrique : batterie lithium, condensateur, super-condensateur, etc. On utilise par exemple une batterie commercialisée par la société KOKAM sous la référence K720.

La batterie 7 est installée dans le logement 100 en même temps que les autres éléments. Elle est connectée d'une part à l'alternateur 62 et d'autre part à l'unité de commande 6, laquelle unité est adaptée pour réguler et/ou redresser le courant produit et gérer l'alimentation des différents éléments auxquels ladite unité est connectée.

Pour simplifier l'installation dans le logement 100, d'une part de la turbine 6, et d'autre part de l'actionneur 4 et des différents éléments 30, 31, 32, 5, 6, 7, 9 constitutifs du dispositif de stabilisation, il est préférable que la jambe 1, le profilé porteur 200 et le logement 60 se présentent sous la forme de deux pièces moulées creuses, ces pièces étant symétriques par rapport au plan sagittal de l'hydrofoil H, lequel plan forme plan de joint. Après l'installation des différents éléments précités, les deux pièces sont fixées l'une à l'autre par collage, soudage ou vissage. Pour simplifier davantage l'assemblage de l'hydrofoil, dans le cas où les pièces moulées sont réalisées à base de fibres imprégnées stratifiées autour d'un coeur en matériau tendre (mousse ou bois), des logements dédiés à chacun des éléments précités sont préférentiellement réalisés dans ledit coeur.

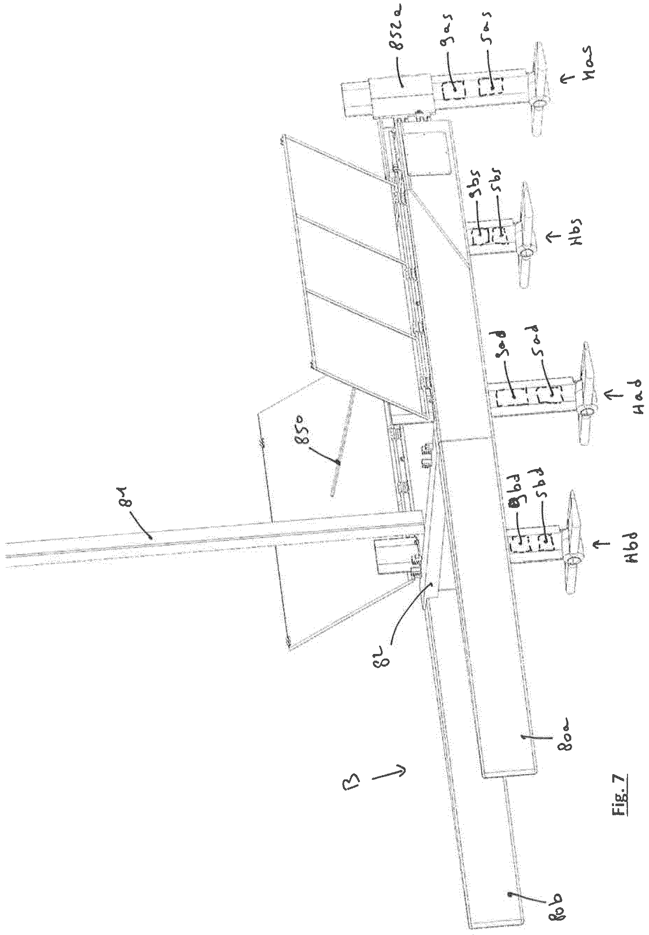

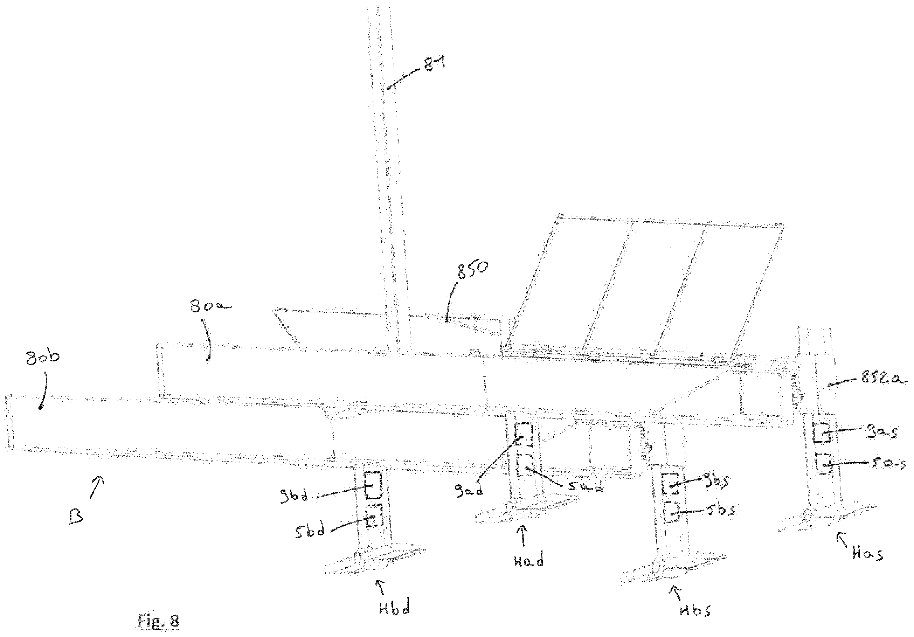

En usage, l'hydrofoil H objet de l'invention est installé sur un bateau de manière à être totalement immergé. Dans le mode de réalisation des figures 7 à 9, le bateau B est un multicoque, et se présente plus particulièrement sous la, forme d'un catamaran de course.

Il est formé de deux coques 80a, 80b, ou flotteurs, qui assurent la flottabilité de l'embarcation. Ces deux coques 80a, 80b sont parallèles entre elles et sont reliées par une traverse avant 82 et une traverse arrière 83, lesquelles traverses sont parallèles entre-elles, disposées perpendiculairement audites coques et solidarisées à ces dernières.

Une structure rigide ou souple (de type filet par exemple), formant pont, est agencée dans la zone délimitée par les coques 80a, 80b et les traverses 82, 83.

Un mât 81, fixé sur la traverse avant 82, est adapté pour supporter une voile, le bateau B étant ainsi mû par une force vélique.

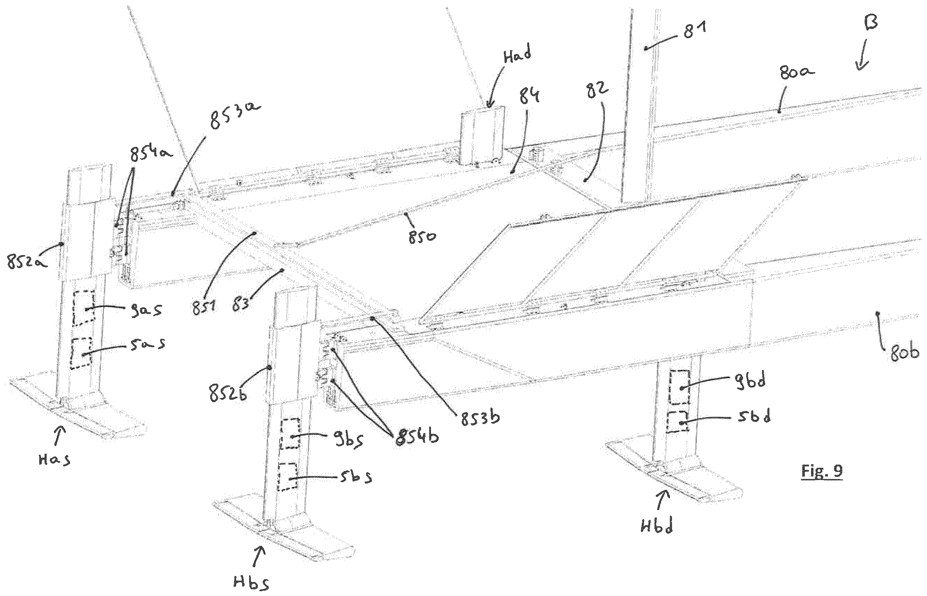

Le contrôle de la direction est classique. Sur la figure 9, un gouvernail 850 est couplé à une barre d'accouplement 851, laquelle barre est elle-même reliée à des pivots d'articulation 852a, 852b par l'intermédiaire de barres franches 853a, 853b. Les pivots d'articulation 852a, 852b sont montés pivotants à l'arrière des coques 80a, 80b par l'intermédiaire d'étrier de fixation 854a, 854b. Ce système de gouverne permet de transmettre le mouvement du gouvernail 850 aux pivots d'articulation 852a, 852b.

Chaque coque 80a, 80b est associée à un hydrofoil Had, Hbd formant dérive et à un autre hydrofoil Has, Hbs formant safran. Ces hydrofoils sont ceux décrits précédemment en référence aux figures 1 à 6. La jambe des hydrofoils Had, Hbd formant dérive permet de résister à la dérive du bateau due à la force vélique. La jambe des hydrofoils Has, Hbs formant safran font partie du système de gouverne et permet de dévier le flux d'eau sous la coque 80a, 80b à laquelle ils sont respectivement associés, de sorte que le bateau B change de direction.

Les hydrofoils Had, Hbd formant dérive peuvent être fixés par collage, soudage ou visage, directement sur les coques 80a, 80b. Préférentiellement, ils viennent se substituer aux dérives existantes, et se loger dans les puits de dérives correspondants.

Les hydrofoils Has, Hbs formant safran sont avantageusement montés dans les pivots d'articulation 852a, 852b. Ils viennent préférentiellement se substituer aux safrans existants.

L'installation des différents hydrofoils est donc effectuée très simplement et très rapidement, seule une connexion « mécanique » des hydrofoils au bateau B devant être assurée.

Les plans porteurs respectifs des hydrofoils Had, Hbd, Has, Hbs ne sont pas forcément identiques. En particulier, les plans porteurs des hydrofoils Had, Hbd formant dérive (à l'avant du bateau) n'ont pas nécessairement la même surface portante que ceux des hydrofoils Has, Hbs formant safran (à l'arrière du bateau).

Par exemple, dans une disposition dite « classique », la surface portante avant est supérieure à la surface portante arrière. Dans une disposition dite « en tandem » (figures 7 à 9), les surfaces portantes sont les mêmes à l'avant et à l'arrière du bateau. Dans une disposition dite « en canard », la surface portante avant est inférieure à la surface portante arrière.

Le choix de la disposition est fonction de la configuration du bateau, du type de navigation (sportive, plaisance, ...), et des conditions de navigation.

Chaque hydrofoil Had, Hbd, Has, Hbs intègre un module d'émission/réception, respectivement 9ad, 9bd, 9as, 9bs sans fil adaptés pour émettre et recevoir des signaux, de sorte que lesdits hydrofoils sont adaptés pour communiquer entre eux par l'intermédiaire d'une liaison sans fil. De manière plus générale les hydrofoils Had, Hbd formant dérive communiquent avec les hydrofoils Has, Hbs formant safran. Ces modules d'émission/réception 9ad, 9bd, 9as, 9bs sont identiques au module 9 décrit précédemment. Un adressage préalable permet d'associer chaque module 9ad, 9bd, 9as, 9bs à une adresse qui lui est propre. Chaque signal émis par un module d'émission/réception 9ad, 9bd, 9as, 9bs, intègre l'adresse du ou des autres modules auquel le signal est destiné.

Comme cela a déjà été décrit précédemment, en réponse à la réception des signaux émis par le système de capteurs auquel elle est associé, chaque unité de commande 5ad, 5bd, 5as, 5bs peut déterminer une valeur d'inclinaison du plan porteur de l'hydrofoil Had, Hbd, Has, Hbs dans lequel elle est intégrée, et générer une instruction de commande correspondante à la valeur d'inclinaison déterminée. Cette instruction de commande est transmise à l'actionneur auquel l'unité de commande Had, Hbd, Has, Hbs est connectée, pour régler l'inclinaison du plan porteur associé.

Grâce aux modules d'émission/réception 9ad, 9bd, 9as, 9bs, l'instruction de commande générée par un hydrofoil peut être transmise à un autre hydrofoil, et notamment à l'hydrofoil associé à la même coque 80a, 80b.

Par exemple, l'instruction de commande générée par l'unité de commande 5ad intégrée dans l'hydrofoil Had associé à la coque 80a, peut être transmise via le module 9ad, à l'unité de commande 5as intégrée dans l'hydrofoil Has associé à la même coque, qui la reçoit via le module 9as.

De même, l'instruction de commande générée par l'unité de commande 5bd intégrée dans l'hydrofoil Hbd associé à la coque 80b, peut être transmise au module 9bs intégré dans l'hydrofoil Hbs associé à la même coque.

Inversement, l'instruction de commande générée par l'unité de commande 5as peut être transmise au module 9ad. Et l'instruction de commande générée par l'unité de commande 5bs peut être transmise au module 9bd.

L'instruction de commande générée par un hydrofoil peut également être transmise à un autre hydrofoil qui n'est pas associé à la même coque 80a, 80b que lui.

Par exemple, l'instruction de commande générée par l'unité de commande 5ad intégrée dans l'hydrofoil Had associé à la coque 80a, peut être transmise au module 9bd intégré dans l'hydrofoil Hbd associé à l'autre coque 80b. Et l'instruction de commande générée par l'unité de commande 5as intégrée dans l'hydrofoil Has associé à la coque 80a, peut être transmise au module 9bs intégré dans l'hydrofoil Hbs associé à l'autre coque 80b.

Inversement, l'instruction de commande générée par l'unité de commande 5bd intégrée dans l'hydrofoil Hbd associé à la coque 80b, peut être transmise au module 9ad intégré dans l'hydrofoil Had associé à l'autre coque 80a. Et l'instruction de commande générée par l'unité de commande 5bs intégrée dans l'hydrofoil Hbs associé à la coque 80b, peut être transmise au module 9as intégré dans l'hydrofoil Has associé à l'autre coque 80a.

Dans le cas d'un bateau multicoque, le canal d'émission/réception des signaux dans lesquels sont intégrées les instructions de commande, n'est pas nécessairement unidirectionnel (dérive→safran ou safran→dérive), mais peut être bidirectionnel (dérive↔safran) ou multidirectionnel de sorte que chaque hydrofoil peut communiquer avec l'un seulement des hydrofoils ou tous les autres hydrofoils, même ceux qui ne sont pas associés à la même coque que lui.

Par exemple, l'instruction de commande générée par l'unité de commande 5ad intégrée dans l'hydrofoil Had associé à la coque 80a, peut être transmise simultanément au module 9bd intégré dans l'hydrofoil Hbd associé à l'autre coque 80b, au module 9bs intégré dans l'hydrofoil Hbs également associé à l'autre coque 80b et au module 9as intégré dans l'hydrofoil Has associé à la même coque 80a.

Selon un autre exemple, l'instruction de commande est transmise de proche en proche, les modules d'émission/réception 9ad, 9bd, 9as, 9bs fonctionnant comme des répéteurs.

Par exemple, l'instruction de commande générée par l'unité de commande 5ad intégrée dans l'hydrofoil Had associé à la coque 80a, est d'abord transmise au module 9as intégré dans l'hydrofoil Has associé à la même coque 80a. Le module 9as retransmet ensuite cette instruction au module 9bs intégré dans l'hydrofoil Hbs associé à l'autre coque 80b, lequel module 9bs retransmet à son tour l'instruction au module 9bb intégré dans l'hydrofoil Hbd également associé à la coque 80b.

Lorsqu'un deuxième module d'émission/réception, par exemple 9as, reçoit une instruction de commande émise par un premier module, par exemple 9ad, cette instruction est transmise à l'unité de commande électronique 5as qui est connectée audit deuxième module. Cette unité de commande 5as est adaptée pour déterminer une valeur d'inclinaison du plan porteur de l'hydrofoil Has auquel ladite unité est associée.

L'algorithme permettant de déterminer cette valeur d'inclinaison prend en compte l'instruction reçue par l'unité de commande 5as. Il peut également prendre en compte les signaux émis par le système de capteurs de l'hydrofoil Has.

Dans ce dernier cas, l'unité de commande 5as traite deux types d'informations : l'information contenue dans l'instruction qu'elle reçoit du module 9as et l'information contenue dans les signaux émis par le système de capteurs de l'hydrofoil Has. Ces informations pouvant être antagonistes, l'algorithme pour déterminer la valeur d'inclinaison, peut leur affecter un ordre prioritaire de façon à en privilégier l'une par rapport à l'autre.

Lorsque la valeur d'inclinaison est déterminée, l'unité de commande 5as génère une instruction de commande correspondante à cette valeur. Cette instruction est alors transmise à l'actionneur de l'hydrofoil Has pour régler l'inclinaison du plan porteur de cet hydrofoil.

Le fait d'assurer une communication entre les hydrofoils Had, Hbd, Has, Hbs permet d'améliorer la stabilité du bateau B et d'optimiser les temps de réaction. En effet, les hydrofoils Had, Hbd, Has, Hbs peuvent maintenant se synchroniser pour atteindre un même objectif.

Un objectif peut être de maintenir tous les hydrofoils Had, Hbd, Has, Hbs à une hauteur d'immersion prédéterminée. Lorsque le bateau B commence à se déplacer, et pour qu'il se soulève plus rapidement, les unités de commandes 5ad, 5bd, 5as, 5bs peuvent se synchroniser pour que les ailerons des hydrofoils avant Had, Hbd soient davantage inclinés vers le bas que les ailerons des hydrofoils arrière Has, Hbs. Si la hauteur d'immersion des hydrofoils Had, Hbd, Has, Hbs dépasse la valeur prédéterminée de référence, les unités de commandes 5ad, 5bd, 5as, 5bs peuvent encore se synchroniser pour que les ailerons des hydrofoils arrière Has, Hbs soient davantage inclinés vers le haut que les ailerons des hydrofoils avant Had, Hbd de manière à ce que le bateau B ne pique pas brutalement du nez.

Pour régler le roulis, les unités de commandes 5ad, 5bd, 5as, 5bs peuvent se synchroniser non seulement pour jouer sur la dissymétrie des ailerons de chaque hydrofoil Had, Hbd, Has, Hbs, mais également pour jouer sur la dissymétrie de la force portante globale induite par les hydrofoils tribord Hbd, Hbs et de la force portante globale induite par les hydrofoils bâbord Had, Has.

Pour régler le tangage, les unités de commandes 5ad, 5bd, 5as, 5bs peuvent se synchroniser pour jouer sur la dissymétrie de la force portante globale induite par les hydrofoils avant Had, Hbd et de la force portante globale induite par les hydrofoils arrière Has, Hbs.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- En usage, c'est-à-dire lorsqu'elle est associée à la coque d'un bateau, la jambe de force 1 est située dans un plan vertical et le profilé porteur 2 dans un plan horizontal. La jambe 1 peut être strictement verticale ou sensiblement verticale, c'est-à-dire légèrement inclinée de quelques degrés vers l'avant ou vers l'arrière du bateau. Dans ce dernier cas, au repos, l'inclinaison du plan porteur 2 est telle qu'il reste situé dans un plan horizontal pour réduire la traînée.
- Le plan porteur 2 peut avoir un profil biconvexe dissymétrique, plan-convexe, creux, etc.
- Le bord de fuite 23 peut être constitué d'un unique aileron à inclinaison réglable. Dans ce cas, l'actionneur 4 est accouplé à une unique tige 41.
- Le logement 100 peut avoir une section carrée, rectangulaire, lenticulaire, etc.
- Chaque tige 41 peut se présenter sous la forme d'une crémaillère s'engrenant sur un pignon denté solidaire de l'aileron 23 correspondant.
- Le plan porteur 2 peut être d'un seul tenant, sans aileron mobile. Dans ce cas, c'est l'ensemble du plan porteur 2 qui est monté mobile en rotation autour d'un axe horizontal, l'actionneur 4 étant accouplé audit plan porteur de manière à régler son inclinaison.
- Le logement 60 peut être installé au dessus de l'intersection de la jambe 1 et du plan porteur 2 ou au dessous dudit plan porteur, ou être intégré dans le profilé porteur 200. On peut encore prévoir deux ou plusieurs turbines hydroélectriques chacune logée dans un logement intégré dans le profilé porteur 200, ces logements étant disposés symétriquement par rapport à la jambe 1.
- Le bateau B n'est pas nécessairement propulsé par une force vélique, il peut être propulsé par moteur.
- Le nombre d'hydrofoils équipant le bateau B dépend notamment de sa masse et de sa structure. Ce nombre est généralement compris entre 1 et 4, bien qu'un nombre supérieur puisse être envisagé.
- Le bateau B peut comporter plus ou moins de deux coques, et notamment être du type monocoque, ou du type trimaran. Dans le cas d'un monocoque, la coque est associée à un hydrofoil formant dérive et à un autre hydrofoil formant safran. Dans le cas d'un trimaran, seule la coque centrale, ou au contraire chaque coque, peut être associée à un hydrofoil formant dérive et à un autre hydrofoil formant safran.

## Revendications

1. Aile portante en forme de T inversé adaptée pour être installée sur un bateau, laquelle aile portante (H) comprend :
- une jambe de force (1),
- un plan porteur (2) attaché à la jambe de force (1) et dont l'inclinaison est réglable,
- un logement (100) aménagé dans la jambe de force (1),
- un système de capteurs (30, 31, 32) installé sur la paroi extérieure de la jambe de force (1) et/ou dans le logement (100), lequel système de capteurs est adapté pour déterminer au moins un mouvement de l'aile portante (H),
- un actionneur (4) adapté pour régler l'inclinaison du plan porteur (2), lequel actionneur est intégré dans le logement (100) de la jambe de force (1),
**se caractérisant par le fait que** :
- le logement (100) de la jambe de force (1) intègre une unité de commande (5) adaptée pour commander l'actionneur et faire varier l'inclinaison du plan porteur (2) en fonction du mouvement de l'aile portante (H) déterminé par le système de capteurs (30, 31, 32),
- l'unité de commande électronique (5) et/ou l'actionneur (4) et/ou le système de capteurs (30, 31, 32) sont à fonctionnement électrique, leur alimentation électrique étant assurée par une turbine hydroélectrique (6) installée dans l'aile portante (H).

2. Aile portante selon la revendication 1, dans laquelle la turbine hydroélectrique (6) est logée dans un logement (60) agencé à l'intersection de la jambe de force (1) et du plan porteur (2).

3. Aile portante selon l'une des revendications précédentes, dans laquelle la turbine hydroélectrique (6) alimente une batterie électrique (6), laquelle batterie est installée dans le logement (100) de la jambe de force (1).

4. Aile portante selon l'une des revendications précédentes, dans laquelle l'unité de commande (5) est connectée d'une part au système de capteurs (30, 31, 32) et d'autre part à l'actionneur (4), laquelle unité de commande est adaptée pour :
- déterminer une valeur d'inclinaison du plan porteur (2) en réponse à la réception des signaux émis par le système de capteurs (30, 31, 32),
- générer une instruction de commande correspondante à la valeur d'inclinaison déterminée,
- transmettre cette instruction de commande à l'actionneur (4) pour régler l'inclinaison du plan porteur (2) à la valeur d'inclinaison déterminée.

5. Aile portante selon la revendication 4, dans laquelle :
- le plan porteur (2) comprend un profilé porteur fixe (200) qui est solidaire de la jambe de force (1) et un bord de fuite (23) présentant deux ailerons à inclinaison réglable, lesquels ailerons sont montés mobile en rotation sur ledit profilé porteur,
- l'actionneur (4) est accouplé à chacun des ailerons de manière à faire varier indépendamment leur inclinaison respective,
- le système de capteurs (30, 31, 32) est adapté pour déterminer le mouvement de roulis de l'aile portante (H),
- l'unité de commande est adaptée pour :
∘ déterminer une valeur d'inclinaison de chaque aileron en réponse à la réception des signaux émis par le système de capteurs (30, 31, 32),
∘ générer des instructions de commande correspondante aux valeurs d'inclinaison déterminées,
∘ transmettre ces instructions de commande à l'actionneur (4) pour régler l'inclinaison de chaque aileron à la valeur d'inclinaison respectivement déterminée et obtenir une courbure dissymétrique du plan porteur (2).

6. Aile portante selon l'une des revendications précédentes, dans laquelle :
- le plan porteur (2) comprend un profilé porteur (200) fixe solidaire de la jambe de force (1) et au moins un aileron de bord de fuite (23) à inclinaison réglable, lequel aileron est monté mobile en rotation sur le profilé porteur (200),
- l'actionneur (4) est accouplé à l'aileron de bord de fuite (23) de manière à faire varier son inclinaison.

7. Aile portante selon l'une des revendications précédentes, dans laquelle le système de capteurs comprend un ou plusieurs des capteurs suivants :
- un capteur de hauteur d'eau (30) adapté pour déterminer la profondeur d'immersion de la jambe de force (1),
- une centrale inertielle (31) comprenant : deux gyroscopes verticaux adaptés pour déterminer les angles de tangage et de roulis de l'aile portante (H) ; et/ou un gyroscope horizontal adapté pour déterminer l'angle de lacet de ladite aile ; et/ou un accéléromètre tri-axial adapté pour mesurer l'accélération de ladite aile induite par le tangage et le roulis de ladite aile,
- un GPS (32) adapté pour mesurer la vitesse de déplacement de l'aile portante (H).

8. Aile portante selon l'une des revendications précédentes, dans laquelle le logement (100) de la jambe de force (1) intègre un module d'émission/réception (9) sans fil adapté pour émettre et recevoir des signaux.

9. Bateau comportant :
- au moins une aile portante (H) immergée en forme de T inversé, laquelle aile portante comprend :
∘ une jambe de force (1) rattachée au bateau,
∘ un plan porteur (2) attaché à la jambe de force (1) et dont l'inclinaison est réglable,
- un système de capteurs pour déterminer au moins un mouvement du bateau lorsque ce dernier navigue,
- un actionneur (4) adapté pour régler l'inclinaison du plan porteur (2),
- un dispositif de stabilisation (5) adapté pour commander l'actionneur (4) et faire varier l'inclinaison du plan porteur (2) en fonction du mouvement du bateau déterminé par le système de capteurs,
**se caractérisant par le fait que** l'aile portante (H) est conforme à l'une quelconque des revendications 1 à 7, de sorte que :
- le système de capteurs est installé sur la paroi extérieure de la jambe de force (1) et/ou dans le logement (100),
- le dispositif de stabilisation se présente sous la forme d'une unité de commande électronique (5), le logement (100) de la jambe de force (1) intégrant l'actionneur (4) et ladite unité de commande,
- l'unité de commande (5) et/ou l'actionneur (4) et/ou le système de capteurs (30, 31, 32) sont à fonctionnement électrique, leur alimentation électrique étant assurée par une turbine hydroélectrique (6) installée dans l'aile portante (H).

10. Bateau selon la revendication 9, comportant au moins deux ailes portantes conformes à l'une des revendications 1 à 8, et dans lequel :
- une aile portante (Had, Hbd) est installée sur ledit bateau (B) de manière à former une dérive,
- une autre aile portante (Has, Hbs) est installée sur ledit bateau (B) de manière à former un safran.

11. Bateau selon la revendication 10, dans lequel chaque aile portante (Had, Hbd, Has, Hbs) intègre un module d'émission/réception (9ad, 9bd, 9as, 9bs) sans fil adapté pour émettre et recevoir des signaux, de sorte que les deux ailes portantes sont adaptées pour communiquer entre elles par l'intermédiaire d'une liaison sans fil.

12. Bateau selon la revendication 11, dans lequel l'unité de commande électronique (5ad, 5bd) d'une première aile portante (Had, Hbd) est connectée au module d'émission/réception (9ad, 9bd) de ladite première aile portante, laquelle unité de commande est adaptée pour :
- déterminer une valeur d'inclinaison du plan porteur (2) de la première aile portante (Had, Hbd) en réponse à la réception des signaux émis par le système de capteurs de ladite première aile portante,
- générer une instruction de commande correspondant à la valeur d'inclinaison déterminée,
- transmettre cette instruction de commande au module d'émission/réception (9as, 9bs) de la deuxième aile portante (Has, Hbs).

13. Bateau selon la revendication 12, dans lequel l'unité de commande électronique (5as, 5bs) de la deuxième aile portante (Has, Hbs) est connectée au module d'émission/réception (9as, 9bs) de ladite deuxième aile portante, ladite unité de commande étant adaptée pour :
- déterminer une valeur d'inclinaison du plan porteur (2) de la deuxième aile portante (Has, Hbs) prenant en compte l'instruction de commande reçue par le module d'émission/réception (9as, 9bs) de ladite deuxième aile portante,
- générer une nouvelle instruction de commande correspondant à la valeur d'inclinaison déterminée,
- transmettre cette nouvelle instruction de commande à l'actionneur (2) de la deuxième aile portante (Has, Hbs) pour régler l'inclinaison du plan porteur (2) de ladite deuxième aile portante.

14. Bateau selon la revendication 13, dans lequel l'unité de commande électronique (5as, 5bs) de la deuxième aile portante (Has, Hbs) est adaptée pour déterminer la valeur d'inclinaison du plan porteur (2) de ladite deuxième aile portante en prenant en compte non seulement l'instruction de commande reçue par le module d'émission/réception (9as, 9bs) de ladite deuxième aile portante, mais également les signaux émis par le système de capteurs de ladite deuxième aile portante.

15. Bateau selon l'une des revendications 9 à 14 comportant au moins un mât (81) supportant une voile et plusieurs coques (80a, 80b), chaque coque étant associée à une aile portante (Had, Hbd) formant dérive et à une autre aile portante (Has, Hbs) formant safran.

16. Procédé de fabrication d'une aile portante (H) en forme de T inversé, laquelle aile portante comprend une jambe de force (1) à laquelle est attaché un plan porteur (2) dont l'inclinaison est réglable,
**se caractérisant par le fait que** le dit procédé comprend les étapes suivantes :
- aménager un logement (100) dans la jambe de force (1),
- installer un système de capteurs (30, 31, 32) sur la paroi extérieure de la jambe de force (1) et/ou dans le logement (100), lequel système de capteur est adapté pour déterminer au moins un mouvement de l'aile portante (H),
- installer une turbine hydroélectrique (6) dans l'aile portante (H),
- installer dans le logement (100) de la jambe de force (1) un actionneur (4) adapté pour régler l'inclinaison du plan porteur (2) et une unité de commande électronique (5) adaptée pour commander ledit actionneur et faire varier l'inclinaison dudit plan porteur en fonction du mouvement de l'aile portante (H) déterminé par le système de capteurs (30, 31, 32), ladite unité de commande et/ou ledit actionneur et/ou ledit système de capteurs étant à fonctionnement électrique,
- connecter électriquement l'unité de commande électronique (5) et/ou l'actionneur (4) et/ou le système de capteurs (30, 31, 32) à la turbine hydroélectrique (6).

## Patentansprüche

1. Tragflügel in Form eines umgedrehten T, der ausgelegt ist, um auf einem Boot installiert zu werden, wobei der Tragflügel (H) umfasst:
- eine Stützstrebe (1),
- eine Tragfläche (2), die an der Strebe (1) befestigt ist und deren Neigung einstellbar ist,
- eine Aufnahme (100), die in der Strebe (1) eingerichtet ist,
- ein Sensorsystem (30, 31, 32), das an der Außenwand der Stützstrebe (1) und/oder in einer Aufnahme (100) installiert ist, wobei das Sensorsystem ausgelegt ist, um mindestens eine Bewegung des Tragflügels (H) zu bestimmen,
- ein Stellglied (4), das ausgelegt ist, um die Neigung der Tragfläche (2) einzustellen, wobei das Stellglied in die Aufnahme (100) der Stützstrebe (1) integriert ist,
**dadurch gekennzeichnet, dass**:
- die Aufnahme (100) der Stützstrebe (1) eine Steuerungseinheit (5) integriert, die zum Steuern des Stellglieds und zum Variieren der Neigung der Tragfläche (2) in Abhängigkeit von der Bewegung des Tragflügels (H), die durch das Sensorsystem (30, 31, 32) bestimmt wird, ausgelegt ist,
- die elektronische Steuerungseinheit (5) und/oder das Stellglied (4) und/oder das Sensorsystem (30, 31, 32) elektrisch betrieben werden, wobei deren Stromversorgung durch eine hydroelektrische Turbine (6), die in dem Tragflügel (H) installiert ist, gewährleistet wird.

2. Tragflügel nach Anspruch 1, wobei die hydroelektrische Turbine (6) in einer Aufnahme (60) untergebracht ist, die an der Schnittstelle zwischen der Stützstrebe (1) und der Tragfläche (2) angeordnet ist.

3. Tragflügel nach einem der vorhergehenden Ansprüche, wobei die hydroelektrische Turbine (6) eine Elektrobatterie (6) speist, wobei die Batterie in der Aufnahme (100) der Stützstrebe (1) installiert ist.

4. Tragflügel nach einem der vorhergehenden Ansprüchen, wobei die Steuerungseinheit (5) einerseits mit dem Sensorsystem (30, 31, 32) und andererseits mit dem Stellglied (4) verbunden ist, wobei die Steuerungseinheit ausgelegt ist zum:
- Bestimmen eines Neigungswerts der Tragfläche (2) als Reaktion auf den Empfang von Signalen, die von dem Sensorsystem (30, 31, 32) gesendet werden,
- Erzeugen eines Steuerungsbefehls, der dem bestimmten Neigungswert entspricht,
- Übertragen dieses Steuerungsbefehls an das Stellglied (4), um die Neigung der Tragfläche (2) auf den bestimmten Neigungswert einzustellen.

5. Tragflügel nach Anspruch 4, wobei:
- die Tragfläche (2) ein festes Trägerprofil (200), das fest mit der Stützstrebe (1) verbunden ist, und eine Hinterkante (23) umfasst, die zwei Querruder mit einstellbarer Neigung aufweist, wobei die Querruder drehbeweglich an dem Trägerprofil befestigt sind,
- das Stellglied (4) mit jedem der Querruder gekoppelt ist, um deren jeweilige Neigung unabhängig variieren zu lassen,
- wobei das Sensorsystem (30, 31, 32) ausgelegt ist, um die Wankbewegung des Tragflügels (H) zu bestimmen,
- wobei die Steuerungseinheit ausgelegt ist zum:
o Bestimmen eines Neigungswerts jedes der Querruder als Reaktion auf den Empfang von Signalen, die von dem Sensorsystem (30, 31, 32) gesendet werden,
∘ Erzeugen von Steuerungsbefehlen, die den bestimmten Neigungswerten entsprechen,
∘ Übertragen dieser Steuerungsbefehle an das Stellglied (4), um die Neigung jedes Querruders auf den jeweils bestimmten Neigungswert einzustellen und um eine unsymmetrische Krümmung der Tragfläche (2) zu erhalten.

6. Tragflügel nach einem der vorhergehenden Ansprüche, wobei:
- die Tragfläche (2) ein festes Trägerprofil (200), das fest mit der Stützstrebe (1) verbunden ist, und mindestens ein Querruder der Hinterkante (23) mit einstellbarer Neigung umfasst, wobei das Querruder drehbeweglich an dem Trägerprofil (200) befestigt ist,
- das Stellglied (4) mit dem Querruder der Hinterkante (23) gekoppelt ist, um seine Neigung variieren zu lassen.

7. Tragflügel nach einem der vorhergehenden Ansprüche, wobei das Sensorsystem einen oder mehrere der folgenden Sensoren umfasst:
- einen Wasserstandsensor (30), der ausgelegt ist, um die Eintauchtiefe der Stützstrebe (1) zu bestimmen,
- eine Trägheitseinheit (31), umfassend: zwei vertikale Gyroskope, die ausgelegt sind, um die Nick- und Wankwinkel des Tragflügels (H) zu bestimmen; und/oder ein horizontales Gyroskop, das ausgelegt ist, um den Gierwinkel des Flügels zu bestimmen; und/oder einen dreiachsigen Beschleunigungsmesser, der ausgelegt ist, um die Beschleunigung des Flügels zu messen, die durch das Nicken und das Wanken des Flügels induziert wird,
- ein GPS (32), das ausgelegt ist, um die Bewegungsgeschwindigkeit des Tragflügels (H) zu messen.

8. Tragflügel nach einem der vorhergehenden Ansprüche, wobei die Aufnahme (100) der Stützstrebe (1) ein drahtloses Sende-/Empfangsmodul (9) integriert, das ausgelegt ist, um Signale zu senden und zu empfangen.

9. Boot, umfassend:
- mindestens einen eingetauchten Tragflügel (H) in Form eines umgedrehten T, wobei der Tragflügel umfasst:
∘ eine Stützstrebe (1), die an dem Boot befestigt ist,
∘ eine Tragfläche (2), die an der Strebe (1) befestigt ist und deren Neigung einstellbar ist,
- ein Sensorsystem, um mindestens eine Bewegung des Boots zu bestimmen, wenn dieses fährt,
- ein Stellglied (4), das ausgelegt ist, um die Neigung der Tragfläche (2) einzustellen,
- eine Stabilisierungsvorrichtung (5), die ausgelegt ist, um das Stellglied (4) zu steuern und die Neigung der Tragfläche (2) in Abhängigkeit von der Bewegung des Boots, die durch das Sensorsystem bestimmt wird, variieren zu lassen,
**dadurch gekennzeichnet, dass** der Tragflügel (H) einem der Ansprüche 1 bis 7 entspricht, so dass
- das Sensorsystem auf der Außenwand der Stützstrebe (1) und/oder in der Aufnahme (100) installiert ist,
- die Stabilisierungsvorrichtung die Form einer elektronischen Steuerungseinheit (5) aufweist, wobei die Aufnahme (100) der Stützstrebe (1) das Stellglied (4) und die Steuerungseinheit integriert,
- die Steuerungseinheit (5) und/oder das Stellglied (4) und/oder das Sensorsystem (30, 31, 32) elektrisch betrieben werden, wobei deren Stromversorgung durch eine hydroelektrische Turbine (6), die in dem Tragflügel (H) installiert ist, gewährleistet wird.

10. Boot nach Anspruch 9, umfassend mindestens zwei Tragflügel nach einem der Ansprüche 1 bis 8, und wobei:
- ein Tragflügel (Had, Hbd) an dem Boot (B) installiert ist, um ein Schwert zu bilden,
- ein anderer Tragflügel (Has, Hbs) an dem Boot (B) installiert ist, um ein Ruder zu bilden,

11. Boot nach Anspruch 10, wobei jeder Tragflügel (Had, Hbd, Has, Hbs) ein drahtloses Sende-/Empfangsmodul (9ad, 9bd, 9as, 9bs) integriert, das ausgelegt ist, um Signale zu senden und zu empfangen, so dass die beiden Tragflügel ausgelegt sind, um miteinander über eine drahtloses Verbindung zu kommunizieren.

12. Boot nach Anspruch 11, wobei die elektronische Steuerungseinheit (5ad, 5bd) eines ersten Tragflügels (Had, Hbd) mit dem Sende-/Empfangsmodul (9ad, 9bd) des ersten Tragflügels verbunden ist, wobei die Steuerungseinheit ausgelegt ist zum:
- Bestimmen eines Neigungswerts der Tragfläche (2) des ersten Tragflügels (Had, Hbd) als Reaktion auf den Empfang der Signale, die von dem Sensorsystem des ersten Tragflügels gesendet werden,
- Erzeugen eines Steuerungsbefehls, der dem bestimmten Neigungswert entspricht,
- Übertragen dieses Steuerungsbefehls an das Sende-/Empfangsmodul (9as, 9bs) des zweiten Tragflügels (Has, Hbs).

13. Boot nach Anspruch 12, wobei die elektronische Steuerungseinheit (5as, 5bs) des zweiten Tragflügels (Has, Hbs) mit dem Sende-/Empfangsmodul (9as, 9bs) des zweiten Tragflügels verbunden ist, wobei die Steuerungseinheit ausgelegt ist zum:
- Bestimmen eines Neigungswerts der Tragfläche (2) des zweiten Tragflügels (Has, Hbs) unter Berücksichtigung des Steuerungsbefehls, der von dem Sende-/Empfangsmodul (9as, 9bs) des zweiten Tragflügels empfangen wurde,
- Erzeugen eines neuen Steuerungsbefehls, der dem bestimmten Neigungswert entspricht,
- Übertragen dieses neuen Steuerungswerts an das Stellglied (2) des zweiten Tragflügels (Has, Hbs), um die Neigung der Tragfläche (2) des zweiten Tragflügels einzustellen.

14. Boot nach Anspruch 13, wobei die elektronische Steuerungseinheit (5as, 5bs) des zweiten Tragflügels (Has, Hbs) ausgelegt ist, um den Neigungswert der Tragfläche (2) des zweiten Tragflügels nicht nur unter Berücksichtigung des Steuerungsbefehls, das von dem Sende-/Empfangsmodul (9as, 9bs) des zweiten Tragflügels empfangen wird, sondern auch der Signale, die von dem Sensorsystem des zweiten Tragflügels gesendet werden, zu bestimmen.

15. Boot nach einem der Ansprüche 9 bis 14, umfassend mindestens einen Mast (81), der ein Segel trägt, und mehrere Rümpfe (80a, 80b), wobei jeder Rumpf mit einem Tragflügel (Had, Hbd), der ein Schwert bildet und mit einem anderen Tragflügel (Has, Hbs), der ein Ruder bildet, verbunden ist.

16. Verfahren zur Herstellung eines Tragflügels (H) in Form eines umgekehrten T, wobei der Tragflügel eine Stützstrebe (1) umfasst, an der eine Tragfläche (2) befestigt ist, deren Neigung einstellbar ist,
**dadurch gekennzeichnet, dass** das Verfahren die folgenden Schritte umfasst:
- Einrichten einer Aufnahme (100) in der Strebe (1),
- Installieren eines Sensorsystems (30, 31, 32) an der Außenwand der Stützstrebe (1) und/oder in einer Aufnahme (100), wobei das Sensorsystem ausgelegt ist, um mindestens eine Bewegung des Tragflügels (H) zu bestimmen,
- Installieren einer hydroelektrischen Turbine (6) in dem Tragflügel (H),
- Installieren in der Aufnahme (100) der Stützstrebe (1) eines Stellglieds (4), das ausgelegt ist, um die Neigung der Tragfläche (2) einzustellen, und einer elektronischen Steuerungseinheit (5), die ausgelegt ist, um das Stellglied zu steuern und die Neigung der Tragfläche in Abhängigkeit von der Bewegung des Tragflügels (H) variieren zu lassen, die durch das Sensorsystem (30, 31, 32) bestimmt wird, wobei die Steuerungseinheit und/oder das Stellglied und/oder das Sensorsystem elektrisch betrieben werden,
- elektrisch Verbinden der elektronischen Steuerungseinheit (5) und/oder des Stellglieds (4) und/oder des Sensorsystems (30, 31, 32) mit der hydroelektrischen Turbine (6).

## Claims

1. Inverted T-shaped wing suitable for being installed on a boat, which wing (H) comprises:
- a strut (1),
- a lifting plane (2) which is attached to the strut (1) and of which the inclination is adjustable,
- a cavity (100) arranged in the strut (1),
- a system of sensors (30, 31, 32) installed on the external wall of the strut (1) and/or in the cavity (100), which system of sensors is designed to determine at least one movement of the wing (H),
- an actuator (4) designed to adjust the inclination of the lifting plane (2), which actuator is integrated into the cavity (100) of the strut (1),
**characterized in that:**
- the cavity (100) of the strut (1) contains a control unit (5) that is designed to control the actuator and to vary the integration of the lifting plane (2) as a function of the movement of the wing (H) as determined by the system of sensors (30, 31, 32),
- the electronic control unit (5) and/or the actuator (4) and/or the system of sensors (30, 31, 32) are electric, being supplied with electricity by a hydroelectric turbine (6) installed in the wing (H).

2. Wing according to Claim 1, in which the hydroelectric turbine (6) is housed in a cavity (60) arranged at the intersection of the strut (1) with the lifting plane (2).

3. Wing according to one of the preceding claims, in which the hydroelectric turbine (6) supplies an electric battery (6), which battery is installed in the cavity (100) of the strut (1).

4. Wing according to one of the preceding claims, in which the control unit (5) is connected on one hand to the system of sensors (30, 31, 32) and on the other hand to the actuator (4), which control unit is designed to:
- determine an inclination value of the lifting plane (2) in response to receiving the signals sent by the system of sensors (30, 31, 32),
- generate a control instruction corresponding to the determined inclination value,
- transmit this control instruction to the actuator (4) in order to adjust the inclination of the lifting plane (2) to the determined inclination value.

5. Wing according to Claim 4, in which:
- the lifting plane (2) comprises a fixed lifting profile (200) that is secured to the strut (1), and a trailing edge (23) having two adjustable-inclination ailerons, which ailerons are mounted so as to be able to rotate on said lifting profile,
- the actuator (4) is coupled to each of the ailerons so as to independently vary their respective inclination,
- the system of sensors (30, 31, 32) is designed to determine the role movement of the wing (H),
- the control unit is designed to:
∘ determine an inclination value of each aileron in response to receiving the signals sent by the system of sensors (30, 31, 32),
∘ generate control instructions corresponding to the determined inclination values,
∘ transmit these control instruction to the actuator (4) in order to adjust the inclination of each aileron to the respectively determined inclination value, and obtain asymmetric curvature of the lifting plane (2).

6. Wing according to one of the preceding claims, in which:
- the lifting plane (2) comprises a fixed lifting profile (200) that is secured to the strut (1), and at least one adjustable-inclination trailing edge (23) aileron, which aileron is mounted so as to be able to rotate on the lifting profile (200),
- the actuator (4) is coupled to the trailing edge (23) aileron so as to vary its inclination.

7. Wing according to one of the preceding claims, in which the system of sensors comprises one or more of the following sensors:
- a water level sensor (30) designed to determine the depth at which the strut (1) is submerged,
- an inertial platform (31) comprising: two vertical gyroscopes designed to determine the pitch and roll angles of the wing (H); and/or a horizontal gyroscope designed to determine the yaw angle of said wing; and/or a triaxial accelerometer designed to measure the exhilaration of said wing induced by the pitch and roll of said wing,
- a GPS unit (32) designed to measure the speed of movement of the wing (H).

8. Wing according to one of the preceding claims, in which the cavity (100) of the strut (1) contains a wireless transmitter/receiver module (9) designed to send and receive signals.

9. Boat comprising:
- at least one submerged inverted T-shaped wing (H), which wing comprises:
∘ a strut (1) attached to the boat,
∘ a lifting plane (2) which is attached to the strut (1) and of which the inclination is adjustable,
- a system of sensors for determining at least one movement of the boat when the boat is underway,
- an actuator (4) designed to adjust the inclination of the lifting plane (2),
- a stabilizing device (5) designed to control the actuator (4) and vary the inclination of the lifting plane (2) as a function of the movement of the boat as determined by the system of sensors,
**characterized in that** the wing (H) conforms to any one of Claims 1 to 7, such that:
- the system of sensors is installed on the external wall of the strut (1) and/or in the cavity (100),
- the stabilizing device is in the form of an electronic control unit (5), the cavity (100) of the strut (1) containing the actuator (4) and said control unit,
- the electronic control unit (5) and/or the actuator (4) and/or the system of sensors (30, 31, 32) are electric, being supplied with electricity by a hydroelectric turbine (6) installed in the wing (H).

10. Boat according to Claim 9, comprising at least two wings according to one of Claims 1 to 8, and in which:
- one wing (Had, Hbd) is installed on said boat (B) so as to form a keel,
- another wing (Has, Hbs) is installed on said boat (B) so as to form a rudder.

11. Boat according to Claim 10, in which each wing (Had, Hbd, Has, Hbs) contains a wireless transmitter/receiver module (9ad, 9bd, 9as, 9bs) designed to send and receive signals, such that the two wings are designed to communicate with one another via a wireless connection.

12. Boat according to Claim 11, in which the electronic control unit (5ad, 5bd) of a first wing (Had, Hbd) is connected to the transmitter/receiver module (9ad, 9bd) of said first wing, which control unit is designed to:
- determine an inclination value of the lifting plane (2) of the first wing (Had, Hbd) in response to receiving the signals sent by the system of sensors of said first wing,
- generate a control instruction corresponding to the determined inclination value,
- transmit this control instruction to the transmitter/receiver module (9as, 9bs) of the second wing (Has, Hbs).

13. Boat according to Claim 12, in which the electronic control unit (5as, 5bs) of the second wing (Has, Hbs) is connected to the transmitter/receiver module (9as, 9bs) of said second wing, said control unit being designed to:
- determine an inclination value of the lifting plane (2) of the second wing (Has, Hbs), taking into account the control instruction received by the transmitter/receiver module (9as, 9bs) of said second wing,
- generate a new control instruction corresponding to the determined inclination value,
- transmit this new control instruction to the actuator (4) of the second wing (Has, Hbs) in order to adjust the inclination of the lifting plane (2) of said second wing.

14. Boat according to Claim 13, in which the electronic control unit (5as, 5bs) of the second wing (Has, Hbs) is designed to determine the inclination value of the lifting plane (2) of said second wing, taking into account not only the control instruction received by the transmitter/receiver module (9as, 9bs) of said second wing, but also the signals sent by the system of sensors of said second wing.

15. Boat according to one of Claims 9 to 14, comprising at least one mast (81) supporting a sail and multiple hulls (80a, 80b), each hull being associated with one wing (Had, Hbd) forming a keel and another wing (Has, Hbs) forming a rudder.

16. Method for producing an inverted T-shaped wing (H), which wing comprises a strut (1) to which is attached an adjustable-inclination lifting plane (2),
**characterized in that** said method comprises the following steps:
- arranging a cavity (100) in the strut (1),
- installing a system of sensors (30, 31, 32) on the external wall of the strut (1) and/or in the cavity (100), which system of sensors is designed to determine at least one movement of the wing (H),
- installing a hydroelectric turbine (6) in the wing (H),
- installing, in the cavity (100) of the strut (1), an actuator (4) designed to adjust the inclination of the lifting plane (2) and an electronic control unit (5) designed to control said actuator and vary the inclination of said lifting plane as a function of the movement of the wing (H) as determined by the system of sensors (30, 31, 32), said control unit and/or said actuator and/or said system of sensors being electrical,
- electrically connecting the electronic control unit (5) and/or the actuator (4) and/or the system of sensors (30, 31, 32) to the hydroelectric turbine (6).
